# EUROPEAN PATENT APPLICATION

(11) **EP 3 530 431 A1**
(43) Date of publication of application: **28.08.2019**
(21) Application number: 18159018.3
(22) Date of filing: 27.02.2018
(51) Int. Cl.: B29C 49/42, B29C 49/78, B29K 67/00, B29L 31/00

(54) **STRETCH BLOW-MOULDING ASSEMBLY AND METHOD FOR CONTROL THEREOF**

(71) Applicant: Norgren AG, 8362 Balterswil (CH)
(72) Inventor: RYMANN, Othmar, 8362 Balterswil (CH)
(74) Representative: Gray, James

(57) **Abstract**

The present invention relates to a blow moulding assembly, comprising a valve system comprising a control valve with a piston that is transferable between an open position and a closed position and a sensor arrangement configured to determine a position data of the piston. A control unit is connected to the sensor arrangement and configured to compare the position data with a predetermined reference data and produce a status signal on basis thereof. The status signal can be used to inform the operator if valve maintenance is required. Other aspects of the invention relate to a method for operating a blow moulding assembly.

## Description

### TECHNICAL FIELD

The present invention relates to a valve system, particularly but not exclusively, to a valve system for stretch-blow moulding. Further aspects of the invention relate to a method for controlling a valve system, particularly a stretch blow-moulding assembly.

### BACKGROUND

The invention will be described with a focus on stretch-blow moulding (SBM) for the production of containers, especially bottles, from plastic pre-forms. However, it is also feasible to use the blow moulding assembly and method of the present invention in applications such as extrusion-blow moulding (EBM) and injection-blow moulding (IBM).

Stretch blow-moulding can be used in a variety of applications. However, one of the most widely used applications is in the production of polyethylene terephthalate (PET) products, such as drinking bottles. Typically, the stretch-blow moulding process includes applying a low-pressure fluid supply from a blow valve block along with actuation of a stretch rod during a so-called "pre-blow phase" to stretch the pre-form in a longitudinal direction and radially against the walls of the mold. The stretch-blow moulding process next uses one or more high-pressure fluid supplies during a blowing phase to further expand the pre-form into the blow mold. The resulting product is generally hollow with an exterior shape conforming to the shape of the mold cavity. The blow gas in the preform is then exhausted via an exhaust valve. The stretch-blow moulding process may further include a cold set stage during which cool air is introduced into the pre-form from a cooling valve and recovered by a recovery valve. The cold set stage is usually followed by another exhaust stage. The stretch-blow moulding process is then repeated for each blow moulding cycle.

The blow valve cycle time (actuation time) adds to the overall time to fabricate a PET bottle or product via the stretch-blow moulding process. It is therefore essential to actuate the blow valve as quickly as possible. At the same time, the quality of the containers obtained by SBM is influenced by a large number of parameters. To yield high quality products it is essential to provide a suitable air flow during the pre-blow and blowing phases and a controlled reduction in pressure during the expansion phase before the article is removed from the mold. As a consequence, blow moulding assemblys are highly complex machines in which the inter-relation between different parts of the system are most critical to achieve the desired control of the gas pressures during the different phases.

Due to the above, commonly known blow moulding assemblies require frequent maintenance to keep the system running accurately. However, it is a known problem that the lifetime of each individual component has a variance and thus it is currently impossible to foresee the service need or even approaching break down of the system. As such, existing systems are serviced at regular intervals, such as every 20-30 million cycles, regardless of the true state of wear. With this number being based on an average lifetime of the components, such as a blow valve, there is no guarantee that the system will not break down before the next service is scheduled.

The above problem combined with the fact that blow moulding machines, particularly stretch-blow moulding machines, have extremely high production output rates means that any downtime leads to a large production loss, especially in high season. This is particularly problematic in large stretch-blow moulding machines, which have outputs of up to 80,000 PET bottles per hour.

In view of the above, it is an aim of the present invention to address the disadvantages associated with the prior art. In particular, it is an object of the present invention to provide a blow moulding assembly and a method for controlling said system, which provides a significantly reduced breakdown risk and, at the same time, enhances the service life of some or all of the components of the system.

### SUMMARY OF THE INVENTION

Aspects and embodiments of the invention provide a blow moulding assembly and a method of controlling a blow moulding assembly as claimed in the appended claims.

According to a first aspect, there is provided a blow moulding assembly comprising a valve system having a control valve with a piston that is transferable between an open position and a closed position. The stretch-blow moulding assembly comprises a sensor arrangement configured to determine a position data of the piston and a control unit connected to the sensor arrangement and configured to compare the position data with a predetermined reference data and produce a status signal on basis thereof.

In simple terms, the blow moulding assembly of the present invention continuously monitors the reciprocating movement of the piston between its open and closed position.

For example, the sensor arrangement may be set up to detect the presence of the piston when the latter is in its open position, i.e. when the piston permits a connection between the inlet and the outlet of the control valve. The sensor arrangement transfers the position data to the control unit, which then looks for abnormalities in the position data as compared to a preset reference data, preferably stored in a database of the control unit. If the control unit detects unusual behaviour of the reciprocating movement of the piston, it may inform the operator that a service is required, as will be described in more detail below.

A primary advantage of the new blow moulding assembly is that the state of wear is continuously monitored, such that the likelihood of a sudden breakdown is significantly reduced. Furthermore, it is no longer necessary to schedule regular service checks; rather, service may be delayed until an actual need is detected by the system. As such, the new blow moulding assembly may utilize the full service life of at least the valve system.

In another embodiment, the control unit is configured to calculate a cycle time of the valve system, on basis of the position data, and compare said calculated cycle time with a desired cycle time stored in the reference data. The cycle time of the valve can be defined as the time needed to transfer the control valve into its open position. Such an opening cycle or opening phase begins with the creation of an actuation signal by the control unit, followed by a transfer of the piston from its closed position into its open position. In one example, the control valve may be a pilot operated valve. As such, the cycle time could be defined as the time period required from creation of an actuation signal for the pilot valve by means of the control unit, until the piston of the control valve has reached its open position. In a typical example, it may take 5.5 ms for the pilot valve to be actuated and a further 2.5 ms for the piston to be transferred from its closed to its open position. The (opening) cycle time of the aforesaid example would then be in the region of 8ms. Of course, it is also possible to gauge any other cycle time, such as the time between two consecutive opening events of the control valve piston.

While other factors may indicate abnormalities in the operation of the system, it was found that a change in the valve system cycle times is a reliable and early indication of an upcoming system failure.

The control unit may be configured to change the status signal from a normal state to an alarm state if a timing difference between the desired time and the calculated cycle time exceeds a predetermined alarm threshold stored in the reference data. In the above example of a blow moulding assembly the valve system is expected to require around 8 milliseconds for a full opening cycle. While some smaller variances in cycle times are normal, due to temperature changes, for example, larger and more persistent deviations may be an indication of a problem building up in the system. In one example, the predetermined alarm threshold may be in the region of 90 to 110 percent of the desired cycle time. For example, if the desired cycle time is 8 milliseconds, a lower alarm threshold may be set to about 7.5 milliseconds, whereas an upper alarm threshold maybe set to 8.5 milliseconds.
The control unit may further be configured to stop operation of the blow moulding assembly if the cycle times exceed a predetermined shut/off threshold. A lower shut-off threshold may be in the region of 75 to 90% of the predetermined cycle time, whereas an upper shut-off threshold may be in the region of 110 to 125% of the predetermined cycle time.

According to another embodiment, the sensor arrangement comprises a first sensor component mounted to the piston. The first sensor component may be a metal part or a permanent magnet, which is moved together with the piston between the closed and open position. The first sensor component may be mounted on the front or back face of the piston, or, alternatively, along the side surface of the latter. In either construction, it is advantageous to arrange the first detector component within the piston, such that the detector component does not protrude from the piston so as to avoid contact between the detector component and the piston guide surfaces of the valve. Arranging the first detector component within the piston also protects the latter from environmental influences.

The sensor arrangement may comprise a second sensor component mounted to a valve housing of the valve. The second sensor component may be one of a magnetic, inductive, or capacity sensor component. The second sensor component may be fixed relative to the first sensor component, that is while the second sensor component is static, the first sensor component moves together with the piston with respect to the second sensor component. As the first sensor component moves between the open and closed position of the piston, the second sensor component detects at least parts of the movement and provides a corresponding position data as a feedback signal to the control unit. The second sensor component may either be able to detect the position of the piston / the first detector component only in one particular position, such as the closed or open position, or, alternatively, continuously along its reciprocating path between the open and closed positions.

The second sensor component may be coaxially aligned with the piston. In this regard, the second sensor component may either be arranged in series or parallel to the piston.

According to another aspect of the present invention, there is provided a method for controlling a stretch-blow moulding assembly comprising the steps of:
providing a valve system with a control valve having a piston movable between an open position and a closed position;
providing a sensor arrangement for producing a position data of the piston;
comparing the position date with a predetermined reference data; and
producing a status signal on basis of the comparison between the position data and the reference data.

In another embodiment, a cycle time of the valve system may be calculated, based on the position data, and compared with a desired cycle time stored in the reference data.

The status signal may comprise a normal state and an alarm state, wherein the status signal may be changed from the normal state to the alarm state if a timing difference between the desired cycle time and the calculated cycle time exceeds a predetermined alarm threshold stored in the reference data.

The aforementioned alarm threshold may be set between 90 and 110 percent, of the desired cycle time.

In yet another embodiment, in the alarm state, the status signal creates an operator alarm, prompting the operator to service the stretch-blow moulding assembly. Additionally or alternatively, in the alarm state, the status signal may be transferred to a control unit to stop operation of the stretch blow moulding assembly.

According to another embodiment, the cycle time is calculated as an average cycle time of two or more opening cycles of the valve system. For example, the cycle time may be calculated as a moving average of the two or more operating cycles. According to this particular embodiment, short term fluctuations can be smoothed out, such that unnecessary alarm signals are prevented and only triggered if a long term trend confirms that the alarm threshold is exceeded.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or to file any new claim accordingly, including the right to amend any originally filed claim to depend from and/or incorporate any feature of any other claim although not originally claimed in that manner.

### BRIEF DESCRIPTION OF THE DRAWNGS

One or more embodiments of the present invention will now be described in detail, by way of example only, with reference to the accompanying drawings, in which:
FIGURE 1a shows a perspective view of a valve block for stretch blow moulding;
FIGURE 1b shows a schematic pressure over time diagram of a typical blow moulding process;
FIGURE 2 shows an embodiment of the blow moulding assembly according to the present invention;
FIGURE 3 shows another embodiment of the blow moulding assembly according to the present invention;
FIGURE 4a shows an example of position data when no maintenance is required;
FIGURE 4b shows an example of position data when maintenance is required;
FIGURE 5a shows another embodiment of the blow moulding assembly according to the present invention; and
FIGURE 5b shows an example of position data acquired by the system shown in Figure 5a.

### DETAILED DESCRIPTION

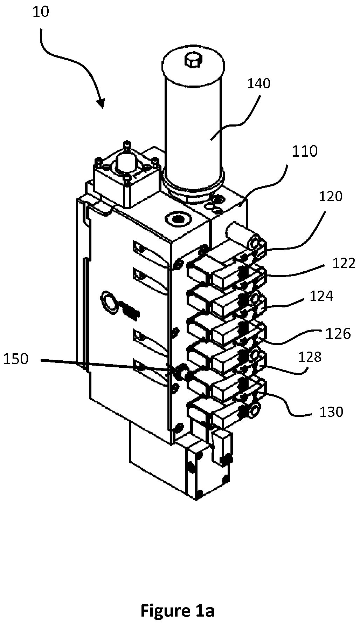

Turning to Figure 1a, there is shown a valve block 10, which may be used in connection with the blow moulding assembly according to the present invention. The valve block 10 comprises a housing 110. A plurality of valve modules 120, 122, 124, 126, 128, 130 are releasably attached to the outside of the housing 110. Alternatively, the valves may be integrated into the structure of the housing 110.

An exhaust silencer 140 is provided on the outer surface of the housing 110. An electrical connector 150, arranged on the outer surface of the housing 110, is provided for power supply and/or interchange of the control signals between the valve modules 120, 122, 124, 126, 128, and 130 and an external control unit (not shown). Alternatively, the valve modules 120 to 130 may be configured to communicate wirelessly with the control unit.

As will be described in more detail below, each of the valve modules 120 to 130 comprises at least one control valve for controlling gas pressures in the blow moulding assembly. At least one of the valves is provided with a sensor arrangement (not shown) that is configured to determine a position data of the piston within a valve housing. Such a sensor arrangement may be provided in one or more of the valve modules 120 to 130.

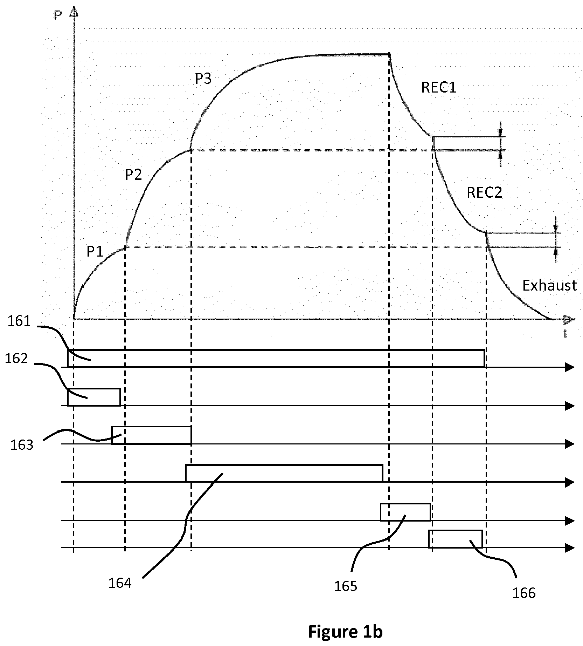

Each of the valve modules 120 to 130 typically fulfils a different function during the blow moulding process. A schematic diagram of a typical blow moulding process is shown in Figure 1b. For each plastic container produced during the blow moulding process, a plurality of valves are used to control the pressures within the system. In a first, pre-blow phase P1, a comparatively low pressure is applied to the plastic preform to expand the latter against the corresponding mould surfaces. During a stretch-blow moulding process, the pre-blow phase P1 typically also includes simultaneous stretching of the pre-mould with a stretch rod. Since the movement of the stretch rod and actuation of the pre-blow valve are synchronised, the timing accuracy for actuation of the pre-blow valve is of utmost importance to the quality of the blow moulding products. The pre-blow phase P1 is followed by one or two main-blow phases P2, P3 in which the plastic container is pressed against the mould surfaces with high pressure to plastically deform the container into its desired, final shape. Typically, the time period or fill time for the pre-blow P1 phase is 30 to 200 milliseconds, whereas the main-blow phases P2 and P3 last for 40 to 200 milliseconds and 40 to 350 milliseconds respectively. Once the plastic container has reached its final shape, the pressure within the mould is removed in one or two recovery phases REC1 or REC2. During the air recovery phases REC1, REC2, pressurised air can be directed to an accumulator or similar devices and may be reused during the blow phases P1 to P3 of the next blow moulding cycle. In a last step, the remaining pressurised air is released from the system via an exhaust valve during a corresponding exhaust phase.

Figure 1b also schematically shows the signals provided by a control unit of the blow moulding system. As will be appreciated, for safety reasons, the exhaust valve is a normally open relief valve. As such, the control unit produces a signal 161 that activates the exhaust valve to be shut during most of the blow-moulding process, until the exhaust phase is reached. The signal 161 begins shortly before the pre-blow phase P1 is initiated. This offset is introduced to accommodate for the time delay between the creation of the signal 161 and closure of the exhaust valve.

A signal 162 provided by the control unit actuates the pre-blow valve to open and provide a pre-blow pressure of typically between 5 and 15 bar. Again, the signal 162 starts shortly before a rise in pressure is achieved during the pre-blow phase P1. This is due to the delay between the creation of the signal 162 and the piston of the corresponding pre-blow control valve reaching its open position (also referred to as the valve system cycle time in this specification). At the end of the pre-blow phase P1, i.e. shortly before the first main-blow phase P2, a signal 163 is created by the control unit to activate a first main-blow valve. The same is the case with a signal 164 which opens a second main-blow valve, just before the second main-blow phase P3. At the end of the second main-blow phase P3, a signal 165 is created by the control unit to initiate the first recovery phase REC1. At the end of the first recover phase REC1, another signal 166 is created to start the second recovery phase REC2. Once the two recovery phases are finished, the signal 161 for the exhaust valve changes to trigger the exhaust valve to transfer between its closed state into its open state. In its open state, the exhaust valve vents the remaining pressure towards the environment.

Existing blow moulding assemblies include pressure sensors that continuously monitor the blow-moulding process and determine any unexpected change in pressure. However, a change in pressure may have a variety of causes such that this conventional method cannot predict the end of the service life of the blow-moulding systems individual components accurately.

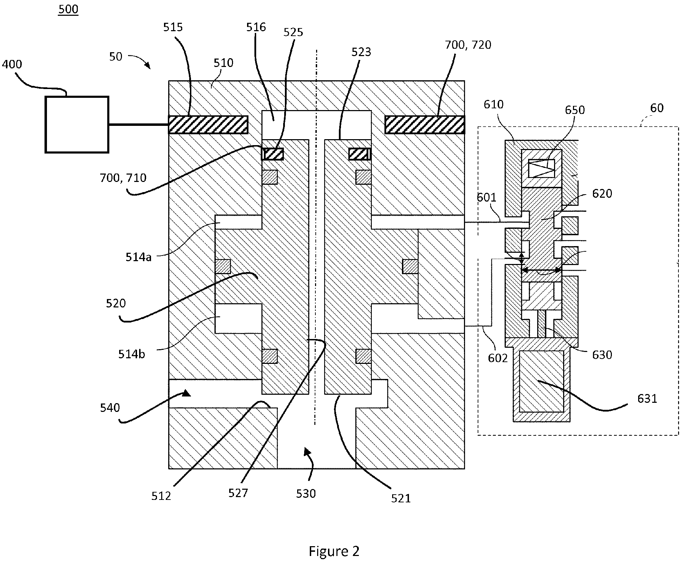

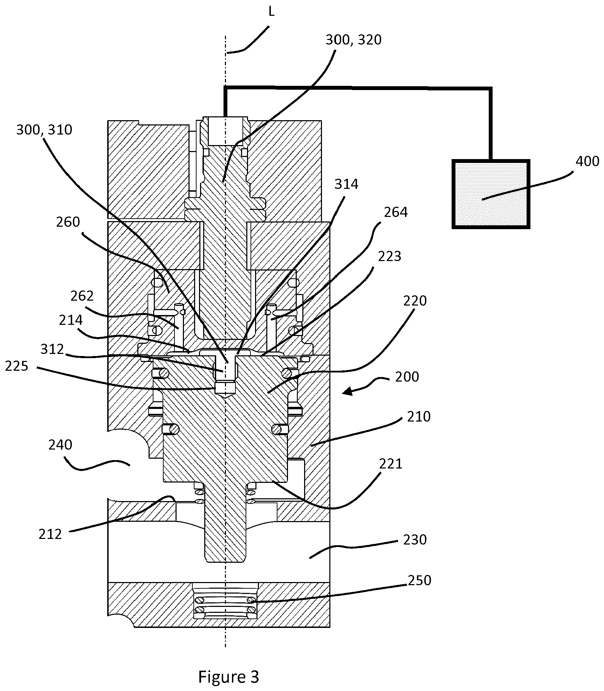

An embodiment of the present invention is shown in Figure 2. Figure 2 shows a schematic cross-section of a valve system 500. The valve system 500 includes a control valve 50 with a valve housing 510 and piston 520. The control valve 50 of Figure 3 is a pressure compensated valve. To this end, a pressure compensation bore 527 is provided between the front face 521 and the back face 523 of the piston 520. The pressure compensation bore 527 extends between the air inlet 530 and a pressure compensation chamber 516. It will be appreciated by the skilled person that the valve 50 shown in Figure 3 is only pressure compensated in its open position, whereas in the closed position a small closing bias is created by an air pressure within compensation chamber 516 that acts on the slightly larger back face 523.

Upper and lower control chamber 514a, 514b are provided to transfer the piston 520 between its open and closed position. If pressurised air is introduced into upper control chamber 514a and, at the same time, lower control chamber 514b is vented, the piston 520 is pushed downwards towards the valve seat 512, into its closed position. If pressurised air is supplied to the lower control chamber 514b, and, at the same time, the upper control chamber 514a is vented, the piston 530 is moved upwards towards its open position.

The pressures in upper and lower control chambers 514a, 514b may be controlled by a pilot valve 60. The pilot valve 60 comprises a pilot valve housing 610 and a pilot piston 620. The pilot valve may be biased into its first position by a resilient member 650. A push rod 630, actuated by a solenoid actuator 631, may be used to control the pilot valve 60 and transfer the piston 620 from its first position into a second position. A first inlet 601 of the pilot valve is connected to the upper control chamber 514a of control valve 50. A second inlet 602 of the pilot valve 60 is connected to the lower control chamber 514b of control valve 50. The pilot valve 60 of this embodiment is constructed as a spool valve and adapted to supply and vent pressurised air to and from the upper and lower control chambers 514a, 514b. In another embodiment (not shown) it would also be feasible to provide a sensor arrangement within the pilot valve 60 to monitor the corresponding cycle times.

The embodiment of Figure 2 comprises a sensor arrangement 700 that is configured to determine position data of the piston 520 within the housing 510 of the control valve 50. The sensor arrangement 700 comprises a first sensor component 710 received within the piston 520 and a second sensor component 720, received within the valve housing 510. In more detail, the first sensor component 710 is arranged as a ring-shaped metal or magnetic part, which is received in an annular groove 525 of the piston 520. The second sensor component 720 of the sensor arrangement 700 is also constructed as a ring-shaped element, particular a ring-shaped Hall sensor, inductive sensor or capacity sensor, and received in corresponding annular grooves 515 of the valve housing 510. The first sensor component 710 is received within annular groove 225 such that it does not protrude over the surface of the piston 220, i.e. the first sensor component 710 is not in contact with the inner side walls of the valve housing 510.

The second sensor component 720 is located at an upper end of the compensation chamber 516, such that the second sensor component 720 will recognise the presence of the first sensor component 710 in the open position of the piston 520 only.

The position data acquired by sensor arrangement 700 is fed back by the second sensor component 720 to control unit 400, which will use the position data received from the sensor arrangement 700 for a comparison with a predetermined reference data to create a status signal of the blow moulding assembly. The database includes predetermined reference data, e.g. preferred cycle times as described hereinbefore. The control unit 400 will calculate the actual cycle time from the position data and compare the latter with the reference data from its database to produce a status signal on basis thereof.

In one example, the control valve 50 may be pre-blow valve. Of course, the control valve could be any blow, recovery or exhaust valve of the blow moulding assembly, however it was found that correct timing of the pre-blow valve is most crucial for reliable blow moulding processes. The cycle time of the valve system 500 might be defined as a time period starting with the creation of the pre-blow signal by the control unit 400 until the piston 520 of the control valve 50 is transferred into its open position. In other words, the cycle time may start with the creation of signal 162 shown in Figure 1b and may end once the sensor arrangement 700 determines that the piston 520 of the pre-blow valve has reached the open position. As such, the opening cycle includes actuation of 3 stages of the valve system 500, namely the solenoid (1st stage), the piston 620 of the pilot valve 60 (2nd stage), and the piston 520 of the control valve 50 (3rd stage). Typically, cycle times should be in the region of 8ms. It will be understood that substantially any other time period could be defined as the cycle time of the present invention, for as long as said cycle time includes activation of the valve/actuator to be monitored within the valve system.

If the cycle time calculated from the position data of the piston 220 is longer or shorter than the predetermined reference cycle time, the control unit 400 may produce a warning/alarm signal to inform the operator that a service is be required. Alternatively or additionally, the control unit may stop the blow moulding assembly to avoid further damage or production of low quality blow moulding products, until the valve 20 has been serviced.

Figure 3 shows a control valve 200 employed in another embodiment of the blow moulding assembly according to the present invention. The control valve 200 comprises a valve housing 210 and a piston 220 received in the valve housing. The piston is arranged to move within the valve housing 210 between an open and a closed position. In Figure 2, the piston 220 is shown in its open position, in which a connection between an inlet 230 and an outlet 240 is established.

The piston 220 of Figure 3 is biased into its open position by means of a resilient member 250, such as an elastic coil spring. The resilient member 250 urges a front face 221 of the piston 220 away from a valve seat 212 of the housing. At an opposite end of the piston 220, a back face 223 is provided that, together with the housing 210, forms a control chamber 214. An air inlet cap 260 is arranged on top of the valve housing 210. The air inlet cap 260 closes the control chamber 214 and facilitates regulation of the amount of pressurised air within control chamber 214. In particular, air inlet cap 260 comprises a plurality of air channels 262, 264, configured to allow pressurised air to be introduced and removed from the control chamber 214. Depending on the air pressure within control 214, the resulting force on the back face 223 of piston 220 may act against the resilient member 250 to transfer the piston 220 into its closed position, i.e. downwards in Figure 3. It will be appreciated that the downwards force resulting from the air pressure within control chamber 214 has to be higher than the combined force of the resilient member 250 and the pressure on piston face 221 to move the piston 220 from its open position in Figure 2 to its closed position (not shown).

In a blow moulding assembly, the piston 220 is moved between its open and closed position in a very short period of time. Of course, such high speed actuation times can only be achieved if the control valve 200 is serviced regularly to ensure suitable alignment of the piston 220 within the valve housing 210. As mentioned in view of Figure 2, if cycle times (e.g. opening cycle times) are becoming longer or shorter than the expected cycle time (e.g. 8 milliseconds), too much or too little blow moulding fluid (pressurised air) may flow between the inlet 230 and the outlet 240 of the valve 20 during the time period of blow phase in question. This directly results in reduced quality moulding products (e.g. plastic containers) and, of course, should be avoided.

To prevent cycle times from becoming too short or too long, prior art blow moulding assemblies are serviced on a regular basis, such as every 20 to 30 million cycles. The present invention avoids the need for regular servicing by providing a sensor arrangement 300 configured to determine the position of the piston 220 within the valve housing 210.

The sensor arrangement 300 in Figure 3 comprises a first sensor component 310, which may be a passive element, such as a metal or magnet piece and a second sensor component 320, which may be an active element, such as a Hall, inductive or capacitate sensor. The first and second sensor component shown in Figure 2 are both coaxially aligned with a longitudinal axis L of the piston 220.

The first sensor component 310 is received in a recess 225 of the piston 220. The recess 225, in this embodiment, is a blind bore extending from the back face 223 of the piston 220 towards the front face 221 along the longitudinal axis L. The first sensor component 310 is a threaded fastener, such as a metallic or magnetic screw threaded into the recess 225, such that a threaded stem portion 312 is fully received within the recess 225, whereas the head portion 314 is arranged on the back face 223 of the piston 220. Alternatively, the first sensor component 210 may be fully received within the recess 225, such that no part of the first sensor component 310 protrudes beyond the back face 223 of the piston 220. It will be appreciated that the first sensor component 310 received within the recess 225 will move together with the piston 220 between an open and closed position thereof.

A second sensor component 320, which may be constructed as a Hall, conductive or capacity sensor is co-linearly aligned with the first sensor component 310 along axis L. The second sensor component 320 may be constructed as a cylinder, which is received within the air inlet cap 260 of valve 20. Preferably, the second sensor component 220 is removably attached to the valve 20, such that it is easily accessible from the outside of the valve 20 and can be removed for maintenance purposes. The second sensor component 320 remains stationary during operation of the valve 20, i.e. during movement of piston 220.

In the embodiment in Figure 3, the second sensor component 220 is configured to recognise the presence of the first sensor component 310 only in the open position of the piston 220. In other words, in this embodiment it is not required to monitor the movement of the piston 220 in every possible position between the open and closed position thereof. Rather, it is sufficient to monitor the time lapse between subsequent open positions of the piston 220.

The second sensor component 320 is connected to a control unit as schematically represented in Figure 3. The position data determined by the sensor arrangement, i.e. a signal that shows when the piston is in its open position, is fed back to the control unit 400 continuously. The control unit 400 may include a database with a predetermined reference data, i.e. preferred cycle times. The control unit 400 will calculate the actual cycle time from the position data and compare the latter with the reference data from its database to produce a status signal on basis thereof.

If the cycle times calculated from the position data of the piston 220 is longer or shorter than the predetermined reference cycle time, the control unit 400 may produce a warning/alarm signal to inform the operator that a service is be required. Alternatively or additionally, the control unit may stop the blow moulding assembly to avoid further damage or production of low quality blow moulding products, until the valve 20 has been serviced.

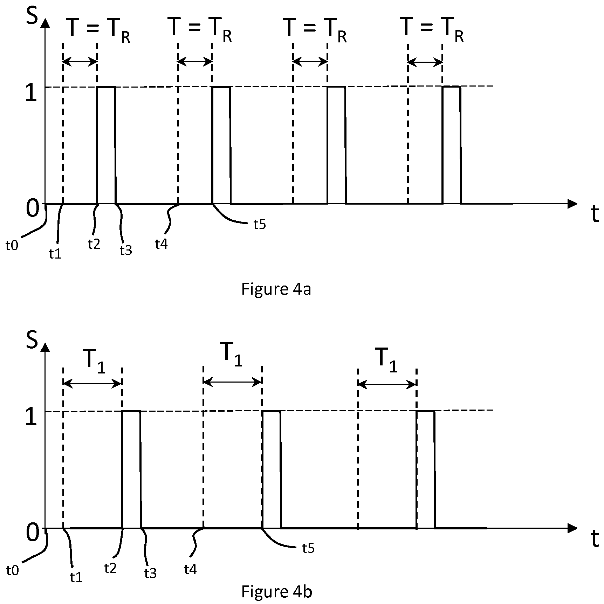

Figure 4a shows an example of the position data determined by the sensor arrangements 300, 700 described hereinbefore. As will be appreciated, at time to, the piston is its closed position and the second sensor component 320, 720 does not register the position of the piston and therefore the position of the first sensor component 310, 710. Once the control unit 400 produces an activation signal for control valve 50, 200, at time t₁, the monitored operating cycle of the valve system begins. At time t₂, the piston enters its open position at which point the second sensor component recognises the presence of the first sensor component and changes the value of the position data signal to 1. The position data signal, which is continuously fed back to the control unit 400, is used by the control unit to determine the actual cycle time as soon as the signal changes from 0 to 1.

The value of 1 is maintained for as long as the piston remains in its open position, i.e. until time t₃, which is when the piston is again moved from its open position towards the closed position and the second sensor no longer recognises the presence of the first sensor component. The position data is thus reduced to zero and remains at this value until the piston is transferred back into its open position at time t₅. A new operating cycle starts with the provision of the actuation signal at time t₄ and ends when the piston reaches the open position a second time at t₅.

The position data signal shown in Figure 4a is continuously provided to the control unit 400 which is configured to use the latter to calculate a cycle time T of the piston. In Figure 4a, a cycle time T_{R}, which is a reference cycle time (e.g. 8 milliseconds) that is expected to lapse between the actuation signal for the control valve 50 or 200 and the piston reaching its open position. If the calculated cycle time T is equal to the reference cycle time T_{R}, the control unit 400 will not produce a warning/alarm signal, rather the status signal produced by the control unit 400 may populate a message to the operator that the system is running normally. This may be the case for as long as the calculated cycle times do not deviate from the reference cycle times by more than a predetermined amount. This acceptable tolerance between the desired cycle time or reference cycle time T_{R} and the calculated cycle time T may be stored in the database of the control unit 400 as a predetermined alarm threshold, which may be part of the reference data.

After a certain amount of time/duty cycles, most valves will start to deviating cycle times as represented schematically in Figure 4b. The position data shown in Figure 4b shows peaks (i.e. timings when the piston is in its open position), which occur significantly less frequent than the peaks shown in Figure 4a. The corresponding cycle time T₁, calculated by the control unit 400, is therefore significantly longer than the reference cycle time stored in the database of the control unit 400. In this example, the calculated cycle time T₁ is about 50% longer than the reference cycle time. Depending on the upper and lower alarm thresholds, which are preferably set at 90% and respectively 110% of the reference cycle time, the control unit may create an alarm signal to inform the operator that service is required. As such, in the example of Figure 4b, the measured cycle time T₁ would be far above the upper alarm threshold and thus an alarm signal will be produced. The control unit 400 may be configured to stop the blow moulding system if the measured cycle times are too far off the alarm threshold, i.e. if the cycle times exceed shut-down thresholds.

The control unit 400 may measure the time lapse between every single peak in the position data. Alternatively, the control unit 400 may create an average across two or more duty cycles to calculate the actual cycle time.

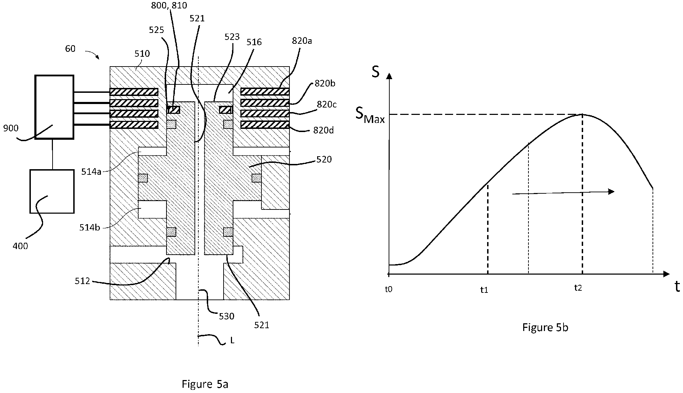

Another embodiment of a blow moulding assembly according to the present invention is shown in Figure 5a. The valve 60 shown in Figure 5a mostly corresponds to the layout of valve 50 shown in Figure 3. As such, identical parts are shown with corresponding reference signs. In contrast to the embodiment shown in Figure 3, the valve 60 of Figure 5a comprises a sensor arrangement 800, which includes a first sensor component represented by a permanent magnet ring 810 received within an annular groove of the piston 520. The sensor arrangement 800 further comprises a plurality of second sensor components 820a, 820b, 820c, 820d. Each of the second sensor components 820a to 820d are constructed as ring-shaped Hall sensors, which are stacked along the longitudinal axis L of piston 520. Each of the second sensor components 820a to 820d produce position data, which may be combined into a single signal by multiplexer 900 and fed back to control unit 400.

This particular arrangement allows for a more accurate determination of the position of the piston 520 within the housing 510.

An example of a combined position data signal received by the control unit 400 is shown in Figure 5b. At time T₀, the piston 520 is in its closed position and only the second sensor component 820d recognises the presence of the first sensor component 810. As the piston moves towards the closed position, i.e. upwards in Figure 5a, the signal strength starts to rise. At time T₁, the first sensor component 810 is positioned between second sensor component 820d and 820c, such that both second sensor component 820c and 820d recognise the presence of the first sensor component 810 and therefore produce a stronger position data signal. The position data signal strength keeps rising until time T₂, which is when the first sensor component is arranged between the second sensor components 820b and 820c. In this state, substantially all of the four second sensor components 820a, 820b, 820c, 820d recognise the first sensor component 810 and thus a peak value Sₘₐₓ is reached in the position sensor signal. As the piston moves further towards the open position, the position data signal starts to fall again, since the second position sensor components 820c, 820d no longer recognise the presence of the first sensor component 810. It will be appreciated that another peak at value Sₘₐₓ will be reached once the piston is half way between its open and closed position. As such, the position data signal of this embodiment includes two peaks per duty cycle, enabling the control unit to monitor the cycle times at higher resolution.

Again, the control unit 400 may inform the operator if the measured cycle times exceed a predetermined alarm signal threshold when compared to the reference cycle times.

## Claims

1. A blow moulding assembly, comprising:
a valve system comprising a control valve with a piston that is transferable between an open position and a closed position;
a sensor arrangement configured to determine a position data of the piston; and
a control unit connected to the sensor arrangement and configured to compare the position data with a predetermined reference data and produce a status signal on basis thereof.

2. The blow moulding assembly of claim 1, wherein, based on the position data, the control unit is configured to calculate a cycle time of the valve system on basis of the position data and compare said calculated cycle time with a desired cycle time stored in the reference data.

3. The blow moulding assembly of claim 2, wherein the control unit is configured to change the status signal from a normal state to an alarm state if a timing difference between the desired cycle time and the calculated cycle time exceeds a predetermined alarm threshold stored in the reference data.

4. The blow moulding assembly of any of claims 1 to 3, wherein the sensor arrangement comprises a first sensor component mounted to the piston.

5. The blow moulding assembly of claim 4, wherein the first sensor component is a metal part or a permanent magnet.

6. The blow moulding assembly of any of claims 1 to 5, wherein the sensor arrangement comprises a second sensor component mounted to a valve housing of said control valve.

7. The blow moulding assembly of claim 6, wherein the second sensor component is one of a magnetic, inductive, or capacitive sensor component.

8. The blow moulding assembly of claim 6 or 7, wherein the second sensor component is co-axially aligned with the piston.

9. A method for controlling a blow moulding assembly comprising the steps of:
providing a valve system with a control valve having a piston movable between an open position and a closed position;
providing a sensor arrangement for producing a position data of the piston;
comparing the position date with a predetermined reference data; and
producing a status signal on basis of the comparison between the position data and the reference data.

10. The method of claim 9, wherein, based on the position data, a cycle time of the valve system is calculated and compared with a desired cycle time stored in the reference data.

11. The method of claim 10, wherein the status signal comprises a normal state and an alarm state, and wherein the status signal is changed from the normal state to the alarm state if a timing difference between the desired cycle time and the calculated cycle time exceeds a predetermined alarm threshold stored in the reference data.

12. The method of claim 11, wherein the alarm threshold is set between 90% and 110% of the desired cycle time.

13. The method of claim 12, wherein in the alarm state, the status signal creates an operator alarm, prompting the operator to service the blow moulding assembly.

14. The method of claim 12 or 13, wherein in the alarm state, the status signal is transferred to a control unit to stop operation of the blow moulding assembly.

15. The method of any of claims 10 to 14, wherein the cycle time is calculated as an average cycle time of two or more of valve system operating cycles.
